# EUROPÄISCHE PATENTSCHRIFT

(11) **EP 3 882 179 B1**
(45) Veröffentlichungstag und Bekanntmachung des Hinweises auf die Patenterteilung: **29.05.2024**
(21) Anmeldenummer: 21164993.4
(22) Anmeldetag: 04.07.2017
(51) Int. Cl.: B65D 85/804, A47J 31/00, A47J 31/06, A47J 31/36

(54) **EINPORTIONENPACKUNG, VERWENDUNG UND ZUBEREITUNGSMASCHINE**
SINGLE-PORTION PACKAGE, USE AND MACHINE FOR A SINGLE-PORTION PACKAGE
EMBALLAGE DE PORTION INDIVIDUELLE, USAGE ET MACHINE POUR UN EMBALLAGE DE PORTION INDIVIDUELLE

(30) Priorität: 07.07.2016 CH 8742016
(43) Veröffentlichungstag der Anmeldung: 22.09.2021
(62) Teilanmeldung aus: 17734117.9
(73) Patentinhaber: Freezio AG, 8580 Amriswil (CH)
(72) Erfinder: Mühlemann, Rolf, 8255 Schlattingen (CH)
(74) Vertreter: Loock, Jan Pieter

(56) Entgegenhaltungen:
- EP-A1- 2 374 733
- WO-A1-2013/139864
- WO-A1-2015/056022
- GB-A- 1 256 247
- US-A1- 2004 191 372

## Beschreibung

### Technisches Gebiet

Die Erfindung betrifft eine Einportionenpackung zur Herstellung eines Getränks aus einem Getränkekonzentrat.

### Technischer Hintergrund

Einportionenpackungen für z.B. Kaffee sind seit langem bekannt. Um den Kaffee in Wasser zu lösen wird heisses Wasser unter Druck durch die Kapsel hindurch geleitet.

In den letzten Jahren sind auch Einportionenpackungen für Getränkekonzentrate, z.B. Sirup oder Pulver, auf den Markt gekommen, bei welchen das Getränkekonzentrat vollständig in Wasser oder karbonisiertem Wasser gemischt oder gelöst wird.

Aus WO2013114346 sind Sirup-Kapseln bekannt, welche zur Entleerung von Hand auf eine bereits mit karbonisiertem Wasser gefüllte Flasche gedrückt werden. Dabei wird eine innere Siegelmembran mittels Einstech- oder Schneidteilen durchbrochen und der Sirup läuft gravitationsbedingt in die Flasche, welche anschliessend geschüttelt oder zumindest geschwenkt werden muss. Auch muss der Flaschenhals so dimensioniert sein, dass die Kapsel und der Auslösemechanismus auf die Flasche passt resp. korrekt ausgelöst wird. Für Getränkezubereitungsmaschinen ist die Kapsel nicht geeignet.

US20110166910 beschreibt eine Sirup-Kapsel, welche in einer Getränkezubereitungsmaschine geöffnet und dabei ausgequetscht wird. Nachteilig ist, dass Teile der Getränkezubereitungsmaschine mit dem Sirup in Kontakt kommen und so nachfolgende Getränke mit dem vorangehenden Sirup kontaminiert werden könnten (sog. Kreuzkontamination), was allenfalls für Allergiker ein Problem darstellen kann.

Auch sind Kapseln bekannt die in der Getränkezubereitungsmaschine ähnlich der bekannten Kaffeekapseln von einer Seite angestochen werden, um die Mischflüssigkeit durch die Kapsel zu pressen und an der anderen Seite austreten zu lassen. Auch hier besteht die Gefahr der Kreuzkontamination.

Aus der Druckschrift WO 2013 / 139 864 A1 ist ferner eine Einportionenpackung gemäss dem Oberbegriff des Anspruchs 1, mit mehreren Kammern bekannt, die jeweils eine Komponente eines Getränks beinhalten, wobei zwischen den Kammern Verbindungswege besteht, über welche die Komponenten zusammengeführt werden können, um das Getränk herzustellen. In den Verbindungswegen sind zu öffnende Wandabschnitte vorgesehen.

### Darstellung der Erfindung

Eine Aufgabe der Erfindung ist es, eine Einportionenpackung zur Herstellung eines Getränks aus einem Getränkekonzentrat anzugeben, welche ein nachträgliches Mischen im Getränkebehälter unnötig macht und Kreuzkontaminationen vermeidet.

Diese Aufgabe wird durch die Merkmale des Anspruchs 1 gelöst. Die Einportionenpackung zur Herstellung eines Getränks aus einem Getränkekonzentrat umfasst einen verschliessbaren Konzentratbehälter zur Aufnahme des Getränkekonzentrats und eine Extraktions- und Mischvorrichtung. Die Extraktions- und Mischvorrichtung umfasst ein Extraktionsmittel zur Extraktion des Getränkekonzentrats aus dem Konzentratbehälter, eine Mischkammer zur Aufbereitung des Getränks aus dem aus dem Konzentratbehälter extrahierten Getränkekonzentrat und einer zuführbaren Mischflüssigkeit, einen Einlass für die Mischflüssigkeit in die Mischkammer, und einen Auslass für das Getränk aus der Mischkammer.

Beim Einlegen der Einportionenpackung in eine Getränkezubereitungsmaschine wird ein Anschluss für die Mischflüssigkeit hergestellt. Beim Auslösen der Getränkzubereitung wird das Extraktionsmittel betätigt und das Konzentrat kann in die Mischkammer fliessen. Gleichzeitig beginnt die Zufuhr der Mischflüssigkeit. In der Mischkammer wird dann das Getränk aufbereitet indem das aus dem Konzentratbehälter austretende Konzentrat mit der in die Mischkammer eintretenden Mischflüssigkeit, z.B. Wasser oder karbonisiertes Wasser, laufend gemischt wird und über den Auslass direkt in einen Getränkebehälter, z.B. ein Getränkeglas oder eine Flasche, ausgebeben wird. Die mit Konzentrat in Kontakt tretenden Bereiche oder Teile wie Mischkammer, Extraktionsmittel und Auslass sind dabei Teil der Einportionenpackung und werden mit dieser entsorgt. Kreuzkontaminationen sind nicht möglich, indem das Konzentrat nicht mit Teilen der Getränkezubereitungsmaschine in Kontakt kommt.

In einigen Ausführungsformen kann der Konzentratbehälter eine Dünnstelle aufweisen, die vom Extraktionsmittel durchstechbar ausgebildet ist. Die Dünnstelle kann eine auf den Konzentratbehälter aufgeschweisste Siegelfolie sein. In diesem Fall wird Konzentratbehälter von der gleichen Seite befüllt wie er später bei der Verwendung der Einportionenpackung entleert wird. Alternativ kann die Dünnstelle auch angeformt sein und Konzentratbehälter wird von einer anderen Seite, in der Regel von der entgegengesetzten Seite her befüllt. Bei der Verwendung der Einportionenpackung wird die Dünnstelle vom Extraktionsmittel durchstochen und das Konzentrat kann aktiv oder passiv in die Mischkammer befördert werden respektive fliesen.

In einigen Ausführungsformen kann die Extraktions- und Mischvorrichtung einstückig, vorzugsweise spritzgusstechnisch gefertigt sein.

In einigen Ausführungsformen kann die Extraktions- und Mischvorrichtung an einer die Dünnstelle umlaufenden Behälterwand gegenüber dieser dichtend gehalten sein. Die Extraktions- und Mischvorrichtung mit dem Extraktionsmittel ist so über der äusseren Oberfläche der Dünnstelle angeordneten. In der Regel kann dabei die Dünnstelle des Konzentratbehälters die Mischkammer an einer Seite wenigstens teilweise begrenzen.

In einigen Ausführungsformen kann zur Extraktion des Getränkekonzentrats das Extraktionsmittel zur Dünnstelle hin bewegbar ausgebildet sein oder die gesamte Extraktions- und Mischvorrichtung kann zur Dünnstelle hin bewegbar angeordnet sein. D.h. der Konzentratbehälter mit der Dünnstelle kann sich derart gegenüber dem Extraktionsmittel verschieben, dass die Dünnstelle durch das Extraktionsmittel durchbrochen wird.

Das Extraktionsmittel umfasst mindestens ein Einstechteil, zum Durchstechen des Konzentratbehälters, insbesondere der Dünnstelle. Das Extraktionsmittel kann auch als mindestens ein Schneidteil ausgebildet sein oder zusätzlich solche umfassen.

In einigen Ausführungsformen kann das mindestens eine Einstechteil einen Luftkanal aufweisen, mit welchem Luft in den Konzentratbehälter einführbar ist, um das Getränkekonzentrat aus dem Konzentratbehälter zu drücken.

Das mindestens eine Einstechteil ist in der Mischkammer angeordnet.

Das Einstechteil kann dann gleichzeitig als Strömungsschikane für eine bessere Durchmischung dienen.

In einigen Ausführungsformen kann der Einlass und der Auslass an gegenüberliegenden Seiten die Mischkammer angeordnet sein, um eine verbesserte Durchmischung zu erzielen.

In einigen Ausführungsformen kann die Mischkammer zwischen Einlass und Auslass Strömungsschikanen aufweisen, um eine erhöhte Durchmischung von Konzentrat und Mischflüssigkeit zu erreichen. Die Strömungschikanen können ganz oder teilweise durch das Extraktionsmittel ausgebildet sein.

In einigen Ausführungsformen kann die Mischkammer an einer Seite durch die Dünnstelle des Konzentratbehälters begrenzt sein, so dass das Getränkekonzentrat direkt in die Mischkammer austreten kann.

Die Erfindung betrifft weiter die Verwendung einer voran beschriebenen Einportionenpackung in einer Getränkezubereitungsmaschine.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: unter (a) und (b) jeweils eine Schnittdarstellung einer Einportionenpackung mit integrierter Extraktions- und Mischvorrichtung;
- Fig. 2: eine Schnittdarstellung der Einportionenpackung aus Fig. 1 im geöffneten Zustand; und
- Fig. 3: eine Schnittdarstellung einer weiteren Einportionenpackung.

### Wege zur Ausführung der Erfindung

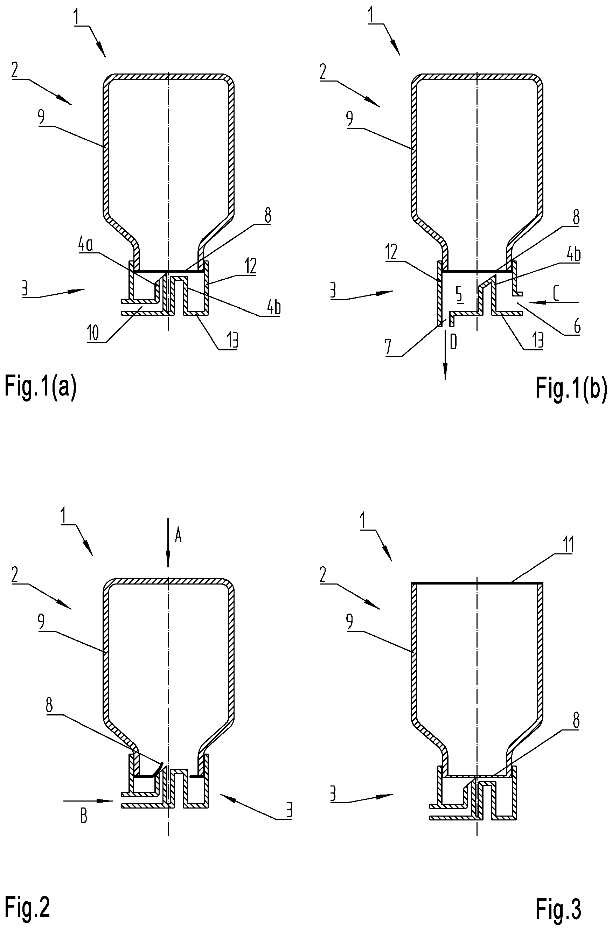

Figuren 1 bis 3 zeigen jeweils vereinfachte Schnittdarstellungen einer Einportionenpackung 1 mit integrierter Extraktions- und Mischvorrichtung 3.

In den Figuren 1(a) und 1(b) ist jeweils die gleiche Einportionenpackung 1 in zwei etwa senkrecht zueinander verlaufenden Schnitten gezeigt. Die Einportionenpackung 1 weist einen Konzentratbehälter 2 zur Aufnahme eines Getränkekonzentrats auf, welches mittels der Extraktions- und Mischvorrichtung 3 aus dem Konzentratbehälter 2 entleert und anschliessend mit einer Mischflüssigkeit gemischt wird.

Der Konzentratbehälter 2 ist in der gezeigt Ausführungsform flaschenförmig als Konzentratflasche mit einem Flaschenhals ausgebildet. Ein solcher Konzentratbehälter 2 kann z.B. mittels Blasformen aus Kunststoff gefertigt sein, vorzugsweise mit einer für Lebensmittel üblichen Barriereschicht. Die Öffnung, welche zum Befüllen des Konzentratbehälters 2 verwendet wird ist mittels einer Siegelfolie versiegelt. Diese Siegelfolie bildet eine Dünnstelle 8 des Konzentratbehälters 2. Im Unterschied zum Konzentratbehälter 2 in den Figuren 1 und 2 kann die Öffnung zur Befüllung des flaschenförmigen Konzentratbehälters 2 auch am breiteren Ende angeordnet und mit einer Siegelfolie 11 verschlossen sein, wie dies in Fig. 3 gezeigt ist. Der Vorteil einer solchen Ausführungsform liegt in der dadurch möglichen spritzgusstechnischen Herstellung ohne Blasformen. Dabei wird die Dünnstelle 8 am engeren Ende durch einen Boden mit einer gegenüber der Behälterwand 9 geringeren Wandstärke ausgebildet. Eine solche Flasche kann ebenfalls eine co-injizierte Barriereschicht aufweisen. Andere Behälterformen wie z.B. zylinderförmige Behälter sind auch möglich.

Die Extraktions- und Mischvorrichtung 3 ist vorzugsweise einstückig aus Kunststoff mittels Spritzgiessen gefertigt und weist eine umlaufende Schürze 12 auf, mit welcher sie bewegbar und dichtend an der die Dünnstelle 8 umlaufenden Behälterwand 9 gehalten ist, so dass die Dünnstelle 8 vollständig von der Extraktions- und Mischvorrichtung 3 überdeckt ist. Zur besseren Halterung können an der Behälterwand 9 und/oder an der Schürze 12 umlaufende Wulste oder Dichtrippen vorhanden sein. Die Extraktions- und Mischvorrichtung 2 ist während dem Gebrauch der Einportionenpackung 1 von einer ersten, geschlossenen Stellung in eine zweite, offene Stellung bewegbar. In der ersten Stellung oder Grundstellung ist die Einportionenpackung 1 geschlossen und bereit zum Gebrauch. Dies ist der Zustand wie sie in den Verkauf gelangt.

Die Extraktions- und Mischvorrichtung 3 weist eine Mischkammer 5 auf, welche einerseits durch die Dünnstelle 8 des Konzentratbehälters 2 und andererseits durch die umlaufende Schürze 12 und einen daran angrenzenden Boden 13 der Extraktions- und Mischvorrichtung 2 begrenzt ist.

Die Extraktions- und Mischvorrichtung 3 umfasst weiter Extraktionsmittel in Form eines vom Boden in Richtung Dünnstelle 8 ragendes Einstechteil 4a mit Luftkanal 10 und eines vom Boden 13 in Richtung Dünnstelle 8 ragendes Öffnungsteil 4b auf. Die Extraktionsmittel 4a, 4b reichen jeweils mit einem spitzen Ende oder einem als Schneidmesser ausgebildeten Ende in der ersten Grundstellung der Einportionenpackung 1 knapp unter die Dünnstelle 8 des Konzentratbehälters 2, so dass sie beim Verschieben der Extraktions- und Mischvorrichtung 3 in Richtung Dünnstelle 8, diese durchstechen resp. durchschneiden und ein Ausfliessen des Konzentrats in die Mischkammer 5 erlauben, wie dies in Fig. 4 dargestellt ist.

Das Einstechteil 4a mit dem Luftkanal 10 dient im Wesentlichen dazu, Luft in den Konzentratbehälter 2 einzublasen, um eine schnellere und effektivere Entleerung des Konzentrats zu erreichen. Bereits das Einstechteil 4a alleine würde eine Entleerung des Konzentratbehälters 2 bewirken. Die Luftzufuhr verhindert zudem ein unerwünschtes Eintreten der Mischflüssigkeit in den Konzentratbehälter 2. Bereits das Einstechteil 4a alleine würde eine Entleerung des Konzentratbehälters 2 bewirken. Das Öffnungteil 4b ist derart ausgestaltet, dass es einen grossen Bereich der Dünnstelle 8 aufreisst, aufbricht oder durchschneidet und dabei eine möglichst grosse Öffnung im Konzentratbehälter 2 zur Extraktion des Konzentrats bewirkt, was zu einer noch schnelleren Entleerung führt.

Die Extraktion- und Mischvorrichtung 2 weist weiter einen Einlass 6 für die Mischflüssigkeit und einen Auslass 7 für das laufend gemischte Getränk auf, welche in der Schnittdarstellung aus Fig. 1(b) ersichtlich sind. Der Einlass 6 ragt in der gezeigt Ausführungsform als Röhrchen seitlich über die Schürze 12 hinaus und ist in einer Getränkezubereitungsmaschine mit einer Mischflüssigkeitszufuhr zur Zuführung von Wasser oder karbonisiertem Wasser verbindbar. Der Auslass 7 ragt in der gezeigten Ausführungsform ebenfalls als Röhrchen nach unten über den Boden 13 hinaus, so dass das in der Mischkammer5 zubereitete Gemisch direkt in einen Getränkebehälter, z.B. Glas, Krug oder Flasche, gefüllt werden kann. Einlass 6 und Auslass 7 sind bevorzugt an entgegengesetzten Seiten der Mischkammer 5 angeordnet. Im Gebrauchszustand ist wie in den Figuren dargestellt der Konzentratbehälter 2 oben und die Extraktions- und Mischvorrichtung 3 unten angeordnet.

Die Mischkammer 5 kann zudem Strömungsschikanen aufweisen, um eine bessere Durchmischung von einfliessender Mischflüssigkeit mit Konzentrat zu gewährleisten. Das Einstechteil 4a und das Öffnungsteil 4b können durch deren Anordnung bereits solche Strömungsschikanen darstellen.

Bei der Verwendung der Einportionenpackung 1 in einer Getränkezubereitungsmaschine wird in einem ersten Schritt eine Verbindung zwischen einer Luftzufuhr und dem Luftkanal 10 und zwischen Mischflüssigkeitszufuhr und dem Einlass 6 hergestellt. Dazu kann der Luftkanal 10 als Röhrchen seitlich über die Schürze 12 vorstehen. Anschliessend wird der Konzentratbehälter 2 mit der Dünnstelle 8 in Richtung Extraktionsmittel 4a, 4b gedrückt (Pfeil A in Fig. 3). Dabei wird die Dünnstelle 8 durchbrochen und der Konzentratbehälter 2 geöffnet. Luftzufuhr (Pfeil B in Fig. 3) und Mischflüssigkeitszufuhr (Pfeil C in Fig. 1(b)) werden im Wesentlichen gleichzeitig eingeschaltet. Die Mischflüssigkeit wird mit dem aus dem Konzentratbehälter 2 extrahierten Konzentrat in der Mischkammer 5 laufend vermischt und tritt als gemischte Getränk aus dem Auslass 7 aus (Pfeil D in Fig. 1(b)).

### Bezeichnungsliste

- 1: Einportionenpackung
- 2: Konzentratbehälter
- 3: Extraktions- und Mischvorrichtung
- 4a: Einstechteil
- 4b: Öffnungsteil
- 5: Mischkammer
- 6: Einlass
- 7: Auslass
- 8: Dünnstelle
- 9: Behälterwand
- 10: Luftkanal
- 11: Siegelfolie
- 12: Schürze
- 13: Boden

## Patentansprüche

1. Einportionenpackung (1) zur Herstellung eines Getränks aus einem Getränkekonzentrat umfassend einen verschliessbaren Konzentratbehälter (2) zur Aufnahme des Getränkekonzentrats, wobei die Einportionenpackung (1) eine Extraktions- und Mischvorrichtung (3) aufweist, umfassend: ein Extraktionsmittel (4a, 4b) zur Extraktion des Getränkekonzentrats aus dem Konzentratbehälter (2), eine Mischkammer (5) zur Aufbereitung des Getränks aus dem aus dem Konzentratbehälter (2) extrahierten Getränkekonzentrat und einer zuführbaren Mischflüssigkeit, einen Einlass (6) für die Mischflüssigkeit in die Mischkammer (5), und einen Auslass (7) für das Getränk aus der Mischkammer (5), wobei das Extraktionsmittel mindestens ein Einstechteil (4a), zum Durchstechen des Konzentratbehälters (2) umfasst, **dadurch gekennzeichnet, dass** das mindestens eine Einstechteil (4a) in der Mischkammer (5) angeordnet ist.

2. Einportionenpackung nach Anspruch 1, **dadurch gekennzeichnet, dass** der Konzentratbehälter (2) eine Dünnstelle (8) aufweist, die vom Extraktionsmittel (4a, 4b) durchstechbar ausgebildet ist.

3. Einportionenpackung nach Anspruch 2, **dadurch gekennzeichnet, dass** die Extraktions- und Mischvorrichtung (3) an einer die Dünnstelle (8) umlaufenden Behälterwand (9) gegenüber dieser dichtend gehalten ist.

4. Einportionenpackung nach einem der Ansprüche 2 oder 3, **dadurch gekennzeichnet, dass** zur Extraktion des Getränkekonzentrats das Extraktionsmittel (4a, 4b) zur Dünnstelle (8) hin bewegbar angeordnet ist oder die gesamte Extraktions- und Mischvorrichtung (3) zur Dünnstelle hin bewegbar ausgebildet ist.

5. Einportionenpackung nach einem der vorhergehenden Ansprüche, **dadurch gekennzeichnet, dass** das mindestens eine Einstechteil (4a) einen Luftkanal (10) aufweist, mit welchem Luft in den Konzentratbehälter (2) einführbar ist, um das Getränkekonzentrat aus dem Konzentratbehälter (2) zu drücken.

6. Einportionenpackung nach einem der vorangehenden Ansprüche, **dadurch gekennzeichnet, dass** Einlass (6) und Auslass (7) an gegenüberliegenden Seiten der Mischkammer (5) angeordnet sind.

7. Einportionenpackung nach einem der vorangehenden Ansprüche, **dadurch gekennzeichnet, dass** der Mischkammer zwischen Einlass (6) und Auslass (7) Strömungsschikanen aufweist.

8. Einportionenpackung nach einem der Ansprüche 2 bis 7, **dadurch gekennzeichnet, dass** die Mischkammer (5) an einer Seite durch die Dünnstelle (8) des Konzentratbehälters (2) begrenzt ist.

9. Verwendung einer Einportionenpackung nach einem der vorangehenden Ansprüche in einer Getränkezubereitungsmaschine.

## Claims

1. Single-portion pack (1) for producing a beverage from a beverage concentrate, comprising a closable concentrate container (2) for holding the beverage concentrate, wherein the single-portion pack (1) has an extraction and mixing device (3) comprising: an extraction means (4a, 4b) for extracting the beverage concentrate from the concentrate container (2), a mixing chamber (5) for preparing the beverage from the beverage concentrate extracted from the concentrate container (2) and a mixing liquid able to be supplied, an inlet (6) for the mixing liquid into the mixing chamber (5), and an outlet (7) for the beverage from the mixing chamber (5), wherein the extraction means comprises at least one piercing part (4a) for piercing the concentrate container (2), **characterized in that** the at least one piercing part (4a) is arranged in the mixing chamber (5).

2. Single-portion pack according to Claim 1, **characterized in that** the concentrate container (2) has a thin point (8) which is configured to be pierceable by the extraction means (4a, 4b).

3. Single-portion pack according to Claim 2, **characterized in that** the extraction and mixing device (3) is held on a container wall (9) encircling the thin point (8) in a manner sealing with respect to said container wall.

4. Single-portion pack according to either of Claims 2 and 3, **characterized in that**, for extracting the beverage concentrate, the extraction means (4a, 4b) is arranged so as to be movable to the thin point (8) or the entire extraction and mixing device (3) is configured to be movable to the thin point.

5. Single-portion pack according to one of the preceding claims, **characterized in that** the at least one piercing part (4a) has an air channel (10) by way of which air is able to be introduced into the concentrate container (2) in order to force the beverage concentrate from the concentrate container (2) .

6. Single-portion pack according to one of the preceding claims, **characterized in that** inlet (6) and outlet (7) are arranged on opposite sides of the mixing chamber (5).

7. Single-portion pack according to one of the preceding claims, **characterized in that** the mixing chamber has flow chicanes between inlet (6) and outlet (7).

8. Single-portion pack according to one of Claims 2 to 7, **characterized in that** the mixing chamber (5) is delimited at one side by the thin point (8) of the concentrate container (2).

9. Use of a single-portion pack according to one of the preceding claims in a beverage-making machine.

## Revendications

1. Emballage monodose (1) pour la préparation d'une boisson à partir d'un concentré de boisson, comprenant un récipient à concentré (2) apte à être fermé afin de recevoir le concentré de boisson, l'emballage monodose (1) présentant un dispositif d'extraction et de mélange (3), comprenant : un moyen d'extraction (4a, 4b) pour extraire le concentré de boisson du récipient à concentré (2), une chambre de mélange (5) pour préparer la boisson à partir du concentré de boisson extrait du récipient à concentré (2) et d'un liquide de mélange apte à être amené, une entrée (6) pour le liquide de mélange dans la chambre de mélange (5), et une sortie (7) pour la boisson hors de la chambre de mélange (5), le moyen d'extraction comprenant au moins une partie de perçage (4a) pour percer le récipient à concentré (2), **caractérisé en ce que** ladite au moins une partie de perçage (4a) est agencée dans la chambre de mélange (5).

2. Emballage monodose selon la revendication 1, **caractérisé en ce que** le récipient à concentré (2) présente une zone mince (8) qui est conçue pour pouvoir être percée par le moyen d'extraction (4a, 4b).

3. Emballage monodose selon la revendication 2, **caractérisé en ce que** le dispositif d'extraction et de mélange (3) est maintenu sur une paroi de récipient (9) entourant la zone mince (8) de manière étanche par rapport à celle-ci.

4. Emballage monodose selon l'une des revendications 2 ou 3, **caractérisé en ce que**, pour l'extraction du concentré de boisson, le moyen d'extraction (4a, 4b) est agencé de manière à pouvoir se déplacer vers la zone mince (8), ou l'ensemble du dispositif d'extraction et de mélange (3) est conçu de manière à pouvoir se déplacer vers la zone mince.

5. Emballage monodose selon l'une des revendications précédentes, **caractérisé en ce que** ladite au moins une partie de perçage (4a) présente un canal (10) pour de l'air, au moyen duquel de l'air est apte à être introduit dans le récipient à concentré (2) afin de presser le concentré de boisson hors du récipient à concentré (2).

6. Emballage monodose selon l'une des revendications précédentes, **caractérisé en ce que** l'entrée (6) et la sortie (7) sont agencées sur des côtés opposés de la chambre de mélange (5).

7. Emballage monodose selon l'une des revendications précédentes, **caractérisé en ce que** la chambre de mélange présente des chicanes d'écoulement entre l'entrée (6) et la sortie (7).

8. Emballage monodose selon l'une des revendications 2 à 7, **caractérisé en ce que** la chambre de mélange (5) est délimitée sur un côté par la zone mince (8) du récipient à concentré (2).

9. Utilisation d'un emballage monodose selon l'une des revendications précédentes dans une machine de préparation de boissons.
